# EUROPÄISCHE PATENTANMELDUNG

(11) **EP 1 645 410 A2**
(43) Veröffentlichungstag der Anmeldung: **12.04.2006**
(21) Anmeldenummer: 05109159.3
(22) Anmeldetag: 04.10.2005
(51) Int. Cl.: B32B 18/00, C04B 35/80

(54) **Formteil aus langfaser- und kurzfaserhaltigen Keramiken**

(30) Priorität: 08.10.2004 DE 102004049406
(71) Anmelder: Deutsches Zentrum für Luft- und Raumfahrt e.V., 53175 Bonn (DE); Duotherm-Isoliersysteme GmbH, 53894 Satzvey (DE)
(72) Erfinder: Schmücker, Martin, 53604, Bad Honnef (DE); Kanka, Bernhard, 51465, Bergisch Gladbach (DE); Stark, Johannes, 53894, Kommern (DE)
(74) Vertreter: Jönsson, Hans-Peter

(57) **Zusammenfassung**

Gegenstand der Erfindung ist ein mehrschichtiges Formteil aus hochtemperaturbeständigen, chemischresistenten und mechanisch schadenstoleranten Keramikwerkstoffen sowie ein Verfahren zur Herstellung des Formteils.

## Beschreibung

Gegenstand der Erfindung ist ein mehrschichtiges Formteil aus hochtemperaturbeständigen, chemisch resistenten und mechanisch schadenstoleranten Keramikwerkstoffen sowie ein Verfahren zur Herstellung des Formteils.

Traditionelle Konstruktionskeramik für Hochtemperaturanwendungen wie beispielsweise Brenngestelle (Brennhilfsmittel) für das Brennen von Porzellan oder Baukeramik aber auch thermische Nachverbrennungsanlagen oder feuerfeste Auskleidung von Hochtemperaturöfen bestehen meistens aus rekristallisiertem Siliziumkarbid (RSiC), monolithischer Oxidkeramik (Aluminiumoxid, Mullit, Kordierit), Schamotten oder aus vakuumgeformten, kurzfaserhaltigen Verbundkeramiken auf Aluminiumoxidbasis.

Monolithische Konstruktionskeramiken versagen bei Überlast spröde und unvorhersehbar. Dadurch können Produktionsabläufe erheblich gestört werden. Nachteilig ist außerdem die hohe Wärmekapazität der dichtgebrannten feuerfesten/hochfeuerfesten Keramiken. Für thermische Prozesse ist daher ein unverhältnismäßig hoher Energieeintrag erforderlich. Eine niedrige Wärmekapazität lässt sich zwar mit porösen monolithischen Keramiken (Keramikschäume) erreichen. Diese besitzen aber nur sehr geringe Festigkeit und sind deshalb für tragende Strukturen häufig ungeeignet.

Nichtoxidische Keramiken wie beispielsweise RSiC, C-SiC oder SiC-SiC sind in oxidierender Atmosphäre bei Temperaturen > 1100 °C nicht langzeitstabil. Nichtoxidische Keramikbauteile müssen daher relativ häufig ausgetauscht werden, besonders wenn eine hohe Oberflächengüte gefordert ist, wie beispielsweise beim Brennen von Porzellan. Die Pflege verursacht hohe Investitions- und Personalkosten.

Vakuumgeformte, kurzfaserige Verbundkeramiken sind aufgrund ihrer geringen Festigkeit für tragende Elemente ebenfalls nicht geeignet. Daher können mit diesen Materialien beispielsweise im Ofenbau bestimmte Abmessungen nicht überschritten werden. Außerdem neigen kommerzielle kurzfaserhaltige Keramikwerkstoffe zu hohem Oberflächenverschleiß.

Langfaserverstärkte Oxidkeramik mit poröser Matrix (beispielsweise "Whipox®", siehe DE 198 26 792 C2) zeigt ein herausragendes Eigenschaftsprofil aus Temperaturbeständigkeit, Schadenstoleranz, niedriger Wärmekapazität und Abrasionsfestigkeit, ist jedoch als "High-Tech"-Werkstoff aus Kostengründen für Massenanwendungen kaum geeignet. Die Ursache des hohen Preises ist in erster Linie auf die Kosten der keramischen Langfasern zurückzuführen.

DE 198 26 792 A1 beschreibt ein thermisch hochbeständiges und oxidationsbeständiges Faserverbundmaterial aus oxidkeramischen Fasern sowie ein Verfahren zu dessen Herstellung.

EP 02 60 867 A1 beschreibt eine Ofenauskleidung aus faserhaltigem keramischem Material.

US 6,472,059 B2 beschreibt einen sandwichartigen Verbund von Langfaser-CMC (Ceramic Matrix Composit) und Kurzfaser-CMC. In dem beschriebenen Verfahren wir ein polymerabgeleiteter Grünkörper durch Pyrolyse keramisiert. Die Verbindung der Lang- und Kurzfaserkomponente erfolgt im Feuchtzustand. Eine gesonderte Matrix für die verschiedenen Schichten ist in D1 nicht realisierbar.

US 5,198,282 A und US 5,376,598 A beschreiben einen keramischen Isolationsverbundwerkstoff. Hierbei weist der Binder der Langfaserkomponente eine hohe Dichte auf und ist glasartig amorph und somit nicht keramisch kristallin. Die in US 5,198,282 A genannten Herstellungstemperaturen deuten darauf hin, dass diese nicht für eine Versinterung ausreichend sind sondern lediglich eine Glasbildung ermöglichen. Dadurch ist die Hochtemperaturbeständigkeit des entstehenden Verbundwerkstoffes durch die Schmelztemperatur des entstehenden Glases beschränkt. Die Matrix enthält Whisker, die aus gesundheitlichen Gründen problematisch sind. Die Verbindung der Lang- und Kurzfaserkomponenten erfolgt im Feuchtzustand.

US 6,733,907 D2 beschreibt einen Verbund aus keramischer Trägerstruktur und keramischer Wärmedämmschicht. Die Wärmedämmschicht weist dabei eine höhere Temperaturbeständigkeit als die langfaserverstärkte Trägerstruktur auf und schützt diese gegen zu hohe thermische Belastungen. Vorraussetzung für dieses Konzept ist eine rückseitige Kühlung und ein hinreichender Wärmetransport durch die Trägerstruktur.

Aufgabe der vorliegenden Erfindung ist es also einen hochtemperaturbeständigen, chemisch resistenten und mechanisch schadenstoleranten Keramikwerkstoff bereitzustellen, dessen Eigenschaften und Bereitstellungskosten innerhalb weiter Bereiche eingestellt werden können. Eine weitere Aufgabe der vorliegenden Erfindung ist es, die oben beschriebenen Probleme des Standes der Technik zu überwinden.

Diese der Erfindung zugrunde liegenden Aufgaben werden in einer ersten Ausführungsform gelöst durch ein mehrschichtiges Formteil aus mindestens einem langfaserverstärkten Verbundmaterial (1) und mindestens einem kurzfaserverstärkten Verbundmaterial (2), dadurch gekennzeichnet, dass
a) das langfaserverstärkte Verbundmaterial (1) keramische Endlosfasern und keramisches Matrixmaterial enthält,
b) das kurzfaserverstärkte Verbundmaterial (2) keramische Fasern mit einer mittleren Länge in einem Bereich von 1 bis 50 mm und keramisches Matrixmaterial enthält, wobei
c) das langfaserverstärkte Verbundmaterial (1) und das kurzfaserverstärkte Verbundmaterial (2) flächig fest miteinander verbunden sind

Endlosfasern im Sinne der Erfindung sind Fasern, gesponnene Fäden, Rovings, Stränge, Schnüre, Vliese oder Gewebe, deren Länge im wesentlichen durch die Dimensionen des langfaserverstärkten Verbundmaterials 1 beschränkt wird.

Die stoffschlüssige Kombination aus hochfester langfaserverstärkter Keramik und kurzfaserverstärktem keramischen Isoliermaterial ermöglicht einen kostengünstigen Hochtemperaturwerkstoff mit gezielt einstellbarer Festigkeit und Oberflächenbeschaffenheit. Aus der Sicht der hochfesten langfaserverstärkten Oxidkeramik bedeutet der partielle Einbau von vorzugsweise kurzfaserverstärkter Keramik, insbesondere Keramikfilz eine deutliche Kostensenkung bei gegebenenfalls verbessertem thermischen Isolationsverhalten und tolerabler Festigkeitseinbuße. Aus Sicht des kurzfaserhaltigen Isoliermaterials werden durch die Verbindung mit langfaserverstärkter schadenstoleranter Hochleistungskeramik neue Anwendungsbereiche wie tragende Strukturen und erosionsstabile Oberflächen erschlossen.

Gegenüber dem Stand der Technik hat das erfindungsgemäße Formteil neben der ausreichenden mechanischen Stabilität und der einfachen, preiswerten Herstellbarkeit komplexer Bauteile den Vorteil, dass es eine geringe Wärmekapazität, Wärmeleitfähigkeit und Dichte aufweist, schadenstolerant ist, einfach bearbeitet werden kann und eine hohe Langzeitstabilität in oxidierender Atmosphäre aufweist. Vorzugsweise können die Fasern und/oder die Matrix des langfaserverstärkten Verbundmaterials 1 und/oder des kurzfaserverstärkten Verbundmaterials 2 aus Mullit oder aus Al₂O₃ oder aus einem Material bestehen, dass in seinem Stoffmengen-Verhältnis zwischen diesen beiden Materialien liegt.

Dadurch, dass die beiden Verbundmaterialien 1 und 2 schon vor der Verbindung zu dem erfindungsgemäßen mehrschichtigen Formteil unabhängig als Verbundmaterialien mit gesonderter Matrix und gesonderten Fasern vorliegen, können die Eigenschaften der einzelnen Schichten im Unterschied zu bekannten mehrschichtigen Formteilen wesentlich besser getrennt voneinander eingestellt werden. So ist es beispielsweise möglich, für das Verbundmaterial 1 eine anders zusammengesetzte Matrix zu verwenden als für das Verbundmaterial 2.

Dadurch, dass das langfaserverstärkte Verbundmaterial 1 bei der vorliegenden Erfindung mit einer keramischen Matrix vorliegt, kann eine wesentlich bessere Hochtemperaturbeständigkeit erzielt werden, als bei bekannten mehrschichtigen Formteilen. So sind die erfindungsgemäßen Formteile vorzugsweise für mindestens 10 Minuten bei 1500 °C stabil, während bekannte mehrschichtige Formteile durch eine Matrix beispielsweise aus Glas nur bis zur Schmelztemperatur des Glases stabil sind. Dies wird vor allem dadurch deutlich, dass vorbekannte mehrschichtige Formteile üblicherweise nicht bei Temperaturen hergestellt werden, die eine Versinterung und damit die Bildung von Keramik erlauben würden. Für Mullit, Al₂O₃-basierte oder ähnliche Keramiken sind hierfür bekanntermaßen mindestens 1100 °C notwendig.

Das keramische Material der Fasern und/oder der Matrix des langfaserverstärkten Verbundmaterials 1 und/oder des kurzfaserverstärkten Verbundmaterials 2 kann vorzugsweise jeweils unabhängig voneinander überwiegend x₁ Al₂O₃ **•** y₁ SiO₂ enthalten, insbesondere daraus bestehen, wobei x₁ eine Zahl im Bereich von 1 bis 5 und y₁ eine Zahl im Bereich von 0 bis 4 ist. Das jeweilige keramische Material kann vorzugsweise auch SiO₂, MgO, Al₂O₃, ZrO₂ als Füllstoff und/oder Dotierung enthalten.

Das langfaserverstärkte Verbundmaterial 1 besteht bevorzugt aus dem Material, dass in der DE 198 26 792 C2 beschrieben ist. Dieses Material wird durch einen Wickelprozess unter Verwendung von feinpartikulärem, sinteraktivem Matrixpulver hergestellt und weist nach dem Sintern eine hohe Matrixporosität und dadurch ein geringes E-Modul der Matrix auf.

Die Verbundmaterialien liegen vorzugsweise als Schichten, insbesondere als flächige oder hohlkörperförmige, besonders bevorzugt als rohrförmige, Schichten vor.

Vorzugsweise beträgt die Wärmeleitfähigkeit des langfaserverstärkten Verbundmaterials 1 und des kurzfaserverstärkten Verbundmaterials 2 jeweils nicht mehr als 3 W/mK, insbesondere nicht mehr als 1,5 W/mK.

Die Porosität des kurzfaserverstärkten Verbundmaterials 2 ist vorzugsweise größer als die Porosität des langfaserverstärkten Verbundmaterials 1, die mindestens 25 % beträgt. Besonders bevorzugt ist die Porosität des kurzfaserverstärkten Verbundmaterials 2 um die Hälfte größer als die Porosität des langfaserverstärkten Verbundmaterials 1. Die Porosität wird folgendermaßen bestimmt. Die theoretische Dichte der Materialien sowohl der Matrix als auch der Fasern ist bekannt. Durch die bekannten Mengenverhältnisse bei der Herstellung der erfindungsgemäßen Formteile kann eine theoretische Dichte bestimmt werden, wenn eine Porosität von 0 Vol.% angenommen wird. Durch die Bestimmung der tatsächlichen Dichte durch Gewichts- und Volumenbestimmung der erfindungsgemäßen Formteile kann die Porosität aus dem Verhältnis der tatsächlichen Dichte zur theoretischen Dichte bestimmt werden.

Das Konzept der porösen Matrix ermöglicht eine preiswerte Herstellung der CMC's (Ceramic Matrix Composits), da Prozessschritte wie beispielsweise Faserbeschichtung und Heißpressen entfallen können. Bislang ist der Einsatz von hochporösen Langfaserkomponenten als langfaserverstärktes Verbundmaterial 1 unbekannt. Die Endlosfasern des langfaserverstärkten Verbundmaterials 1 sorgen für Festigkeit und schadenstolerantes Verformungsverhalten. Das langfaserverstärkte Verbundmaterial 1 hat die Funktion, das kurzfaserverstärkte Verbundmaterial 2 gegen Erosion und Abrasion zu schützen. Im Unterschied zum oben genannten Stand der Technik wird bei der Herstellung des erfindungsgemäßen Formteils kein polymerabgeleiteter Grünkörper für die Matrix eingesetzt, sondern vor allem für das langfaserverstärkte Verbundmaterial 1 bevorzugt ein feinpartikuläres, sinteraktives Pulver in Form eines wässrigen und damit sehr preiswerten Schlickers eingesetzt, welcher zu keinen Abgasemissionen beim Herstellungsverfahren führt.

Zudem muss im Unterschied zum Stand der Technik das erfindungsgemäße Formteil keine Whisker enthalten, die Gesundheitsschäden hervorrufen können.

Die thermische Belastbarkeit des langfaserverstärkten Verbundmaterials 1 ist dabei ähnlich oder sogar höher als die des kurzfaserverstärkten Verbundmaterials 2.

Das keramische Isolationsmaterial des kurzfaserverstärkten Verbundmaterials 2 ist vorzugsweise ein Vakuumformteil der Hersteller Duotherm, Rath oder Alphatec.

Vorzugsweise besteht das langfaserverstärkte Verbundmaterial 1 aus einem Verbund von Nextel®Fasern der Firma 3M und dem sinteraktiven SIRAL x - Pulver der Firma Sasol, wobei x eine Zahl zwischen 1 und 28 ist. Als Alternative zu SIRAL kann auch das Al₂O₃-Pulver PURAL SB eingesetzt werden.

Vorteilhafterweise weist das langfaserverstärkte Verbundmaterial 1 eine Zugfestigkeit von mind. 30 MPa und eine Biegefestigkeit von mind. 30 MPa auf und/oder das kurzfaserverstärkte Verbundmaterial 2 eine Zugfestigkeit von höchstens 2 MPa und eine Biegefestigkeit von höchstens 2 MPa auf. Die angegebene Zugfestigkeit bezieht sich auf die Zugfestigkeit in Faserrichtung. Je höher die erwartete Zug- oder Biegebelastung ist, desto höher wird vorzugsweise der Anteil des langfaserverstärkten Verbundmaterials 1 eingestellt. Bevorzugt werden Bauteilbereiche, die Reibung und Verschleiß ausgesetzt sind, durch diesen hohen Anteil des langfaserverstärkten Verbundmaterials 1 realisiert. Durch die hohe Zug- und Biegefestigkeit des langfaserverstärkten Verbundmaterials 1 und/oder des kurzfaserverstärkten Verbundmaterials 2 und daraus resultierende Biege- und Zugfestigkeit des erfindungsgemäßen Formteils kann dieses auch in Anwendungen mit hoher mechanischer Belastung wie beispielsweise Metallfilteranlagen, thermischen Nachverbrennungsanlagen oder auch Flammrohren für Hochgeschwindigkeitsbrenner eingesetzt werden.

Die Biegefestigkeit des erfindungsgemäßen mehrschichtigen Formteils liegt vorteilhafterweise mindestens 4fach höher als die Biegefestigkeit des kurzfaserverstärkten Verbundmaterials 2 allein.

Vorzugsweise sind die verwendeten Fasern des langfaserverstärkten Verbundmaterials 1 und/oder des kurzfaserverstärkten Verbundmaterials 2 nicht beschichtet. Dadurch kann der sonst übliche Beschichtungsprozess der Fasern in solchen Formteilen eliminiert werden, was zu erheblichen Kosteneinsparungen führt.

Vorteilhafterweise beträgt die Porosität des langfaserverstärkten Verbundmaterials 1 20 bis 70 Vol.%, besonders bevorzugt 40 bis 55 Vol.%, und ganz besonders bevorzugt etwa 50 Vol.%, und/oder die Porosität des kurzfaserverstärkten Verbundmaterials 2 50 bis 90 Vol.%, besonders bevorzugt 80 bis 90 Vol.%. Durch die große Matrixporosität können die erfindungsgemäßen Formkörper preiswert hergestellt werden, da die sonst üblichen und teuren Verfahrensschritte (z.B. Heißpressen) entfallen können. Weiterhin führt die große Porosität zu einer besonders geringen Wärmekapazität und geringer Wärmeleitfähigkeit. Durch die resultierende geringe Dichte des erfindungsgemäßen Formteils sind besonders leichte Bauteile möglich.

Vorzugsweise ist das erfindungsgemäße Formteil entweder
a) als Hohlkörper ausgebildet, wobei mindestens eine Fläche des Verbundmaterials (1) von mindestens einem Verbundmaterial (2) bedeckt ist, oder
b) als Formteil ausgebildet ist, wobei mindestens ein Verbundmaterial (2) auf zwei gegenüberliegenden Flächen von dem Verbundmaterial (1) bedeckt ist oder mindestens ein Verbundmaterial (1) auf zwei gegenüberliegenden Flächen von dem Verbundmaterial (2) bedeckt ist, wobei die Verbundmaterialien (1) vollflächig oder teilflächig ausgebildet sind.

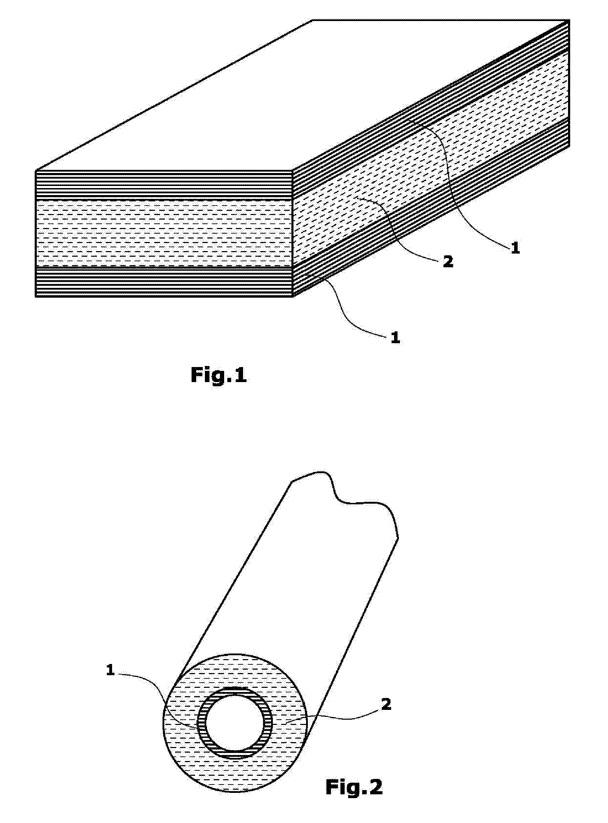

So kann der Hohlkörper nach a) beispielsweise auf seiner Innenseite aus dem langfaserverstärkten Verbundmaterial 1 und auf seiner Außenseite aus dem kurzfaserverstärktem Verbundmaterial 2 bestehen (Fig. 2). Der Hohlkörper kann beispielsweise auch auf seiner Innenseite aus dem kurzfaserverstärkten Verbundmaterial 2 und auf seiner Außenseite aus dem langfaserverstärkten Verbundmaterial 1 bestehen.

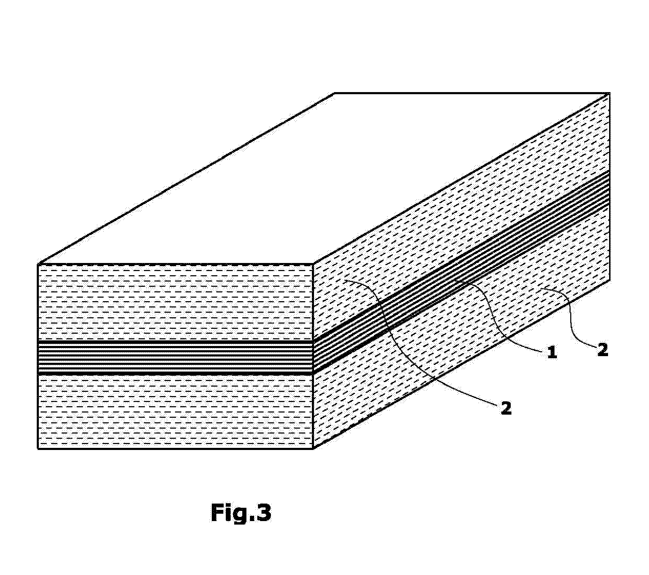

So kann das Formteil b) beispielsweise innen ein kurzfaserverstärktes Verbundmaterial 2 und auf beiden Außenseiten dieser Komponente ein langfaserverstärktes Verbundmaterial 1 aufweisen (Fig. 1). Umgekehrt kann das Formteil nach b) auch beispielsweise innen ein langfaserverstärktes Verbundmaterial 1 und auf beiden Außenseiten dieses Verbundmaterials ein kurzfaserverstärktes Verbundmaterial 1 aufweisen (Fig. 3).

Hierdurch wird eine hohe Flexibilität der Formen des erfindungsgemäßen Formteils gewährleistet.

Die Teilflächigkeit des langfaserverstärkten Verbundmaterials 1 ist vorzugsweise in Form von Stegen oder als Netzstruktur ausgebildet. Hierdurch können vor allem Kosten für das Material des langfaserverstärkten Verbundmaterials 1 eingespart werden und das thermische Isolationsvermögen gesteigert werden.

In einer weiteren Ausführungsform werden die der Erfindung zugrunde liegenden Aufgaben gelöst durch ein Verfahren zur Herstellung eines Formteils dadurch gekennzeichnet, dass man wenigstens ein langfaserverstärktes Verbundmaterial 1 mit wenigstens einem kurzfaserverstärkten Verbundmaterial 2 verbindet. Besonders bevorzugt ist das erfindungsgemäße Verfahren, wenn dieses dadurch gekennzeichnet ist, dass die Schritte zum Verbinden der Verbundmaterialien je nach Anzahl der Verbundmaterialien in dem Formteil einfach oder mehrfach wiederholt werden, wobei
a) die miteinander zu verbindenden Verbundmaterialien 1,2 unabhängig voneinander gesintert, als Grünkörper, trocken oder nass eingesetzt werden,
b) gegebenenfalls ein Keramikkleber eingesetzt wird.

Besonders bevorzugt wird ein Keramikkleber eingesetzt, wenn wenigstens eines der zu verbindenden Verbundmaterialien 1,2 nicht nass ist.

Merkmal b) umfasst also beispielsweise folgende Kombinationen, für den Fall, dass in einem Schritt zwei Verbundmaterialien 1 und 2 miteinander verbunden werden:
- Ein nasses Verbundmaterial wird mit einem nassen, gesinterten, als Grünkörper vorliegenden oder trockenen Verbundmaterial verbunden.
- Ein gesintertes Verbundmaterial wird mit einem gesinterten, als Grünkörper vorliegenden oder trockenen Verbundmaterial verbunden.
- Ein als Grünkörper vorliegendes Verbundmaterial wird mit einem als Grünkörper vorliegenden oder trockenen Verbundmaterial verbunden.
- Ein trockenes Verbundmaterial wird mit einem trockenen Verbundmaterial verbunden.

Ein gesintertes, als Gründkörper vorliegendes oder trockenes Verbundmaterial kann vorzugsweise vor dem Verbinden mit einem weiteren Verbundmaterial befeuchtet werden.

Ein nasses Verbundmaterial im Sinne der Erfindung ist ein Material, das frisch aus den Bestandteilen Faser und Matrix in einem wässrigen Verfahren (Slurry) hergestellt wurde.

Ein langfaserverstärktes Verbundmaterial 1 ist bevorzugt in ein kurzfaserverstärktes Verbundmaterial 2 eingeformt.

Im Unterschied zum Stand der Technik kann durch das erfindungsgemäße Verfahren das kurzfaserverstärkte Verbundmaterial 2 mit dem langfaserverstärkten Verbundmaterial 1 in gebranntem Zustand durch geeignete keramische Kleber zusammengefügt werden. Bevorzugt kommt hierfür Duotherm® 1800 in Frage. Hierdurch kann die Delamination, die durch unterschiedliches Schwindungsverhalten der lang- und kurzfaserigen Bestandteile des langfaserverstärkten Verbundmaterials 1 und des kurzfaserverstärkten Verbundmaterials 2 verursacht werden kann, verhindert werden.

Besonders bevorzugt ist es, wenn ein gesintertes oder ungesintertes langfaserverstärktes Verbundmaterial 1 auf ein gesintertes, zuvor in Wasser getränktes kurzfaserverstärktes Verbundmaterial 2 aufgebracht wird. Alternativ kann besonders bevorzugt ein ungetrocknetes langfaserverstärktes Verbundmaterial 1 auf ein gesintertes kurzfaserverstärktes Verbundmaterial 2 aufgebracht werden. Hierdurch wird eine besonders gute Haftung durch Kapillareffekte erreicht.

Zur Verbindung des langfaserverstärkten Verbundmaterials 1 und des kurzfaserverstärkten Verbundmaterials 2 kann gegebenenfalls ein Kleber verwendet werden.

Prinzipiell lässt sich das erfindungsgemäße Verfahren anwenden, wenn das langfaserverstärkte Verbundmaterial 1 und/oder das kurzfaserverstärkte Verbundmaterial 2 feucht, als getrockneter Grünkörper oder gesintert vorliegen.

Neben allen anderen Anwendungsgebieten, bei denen es auf Hochtemperaturstabilität ankommt, finden die erfindungsgemäßen mehrschichtigen Formteile vor allem Einsatz in der Glas-, Keramik- oder Porzellanindustrie, speziell als Konstruktionskeramik während des Brennvorgangs, in der Müllverbrennung, speziell im rauchgasseitigen Hochtemperaturbereich, in Flammrohren für Hochgeschwindigkeitsbrenner, in thermischen Nachverbrennungsanlagen, in Feuerfest- oder. Hochfeuerfesttechnologie wie beispielsweise Ofenauskleidungen oder thermischer Isolation, in Metallfilteranlagen und vor allem dort den tragenden Strukturen, in Brennern, Brennsteinen und Brennerdüsen .

Ausführungsbeispiel:

Zur Herstellung von Brenngestellen wurde eine ca. 10 - 20 mm starke DUOTHERM®-Platte 2 (vakuumgeformte, kurzfaserhaltige Oxidkeramik) beidseitig mit einer 1 - 3 mm starken WHIPOX®-Platte 1 (Keramikverbund aus kontinuierlichen oxidkeramischen Fasern und einer porösen oxidkeramischen Matrix) belegt (siehe Fig. 1).

Die DUOTHERM®-Platte 2 bestand aus einer Mullitmatrix, die zu 50 Gew.% Kurzfasern aus Al₂O₃ mit einer Faserlänge von bis zu 50 mm enthielt.

Die eingesetzte WHIPOX®-Platte 1 bestand aus einer Al₂O₃-reichen Matrix auf Basis von SIRAL 1 mit 60 Gew.% NEXTEL 720 Fasern. Die Matrix entstand durch Calcinieren, Mahlen und Bildung des Schlickers.

Einen ausreichend starken Verbund dieser beiden Keramiken erhielt man durch Laminierung im noch feuchten Grünzustand. Die DUOTHERM®-Platte 2 wurde wie geliefert, also ungesintert und nass, eingesetzt.

Die Biegefestigkeit des entstandenen erfindungsgemäßen mehrschichtigen Formteils (Sandwich aus 1 mm WHIPOX®-Platte 1, 10 mm DUOTHERM®-Platte 2, 1 mm WHIPOX®-Platte 1) war im 3-Punkt-Biegeversuch 5fach höher als die Biegefestigkeit der DUOTHERM®-Platte 2 (10mm Dicke) allein. Abrasionstests (Stift/Scheibe) zeigten, dass die Verschleißfestigkeit des mehrschichtigen Formteils gegenüber der DUOTHERM-Platte allein um einen Faktor 10 gesteigert werden kann.

Zur Herstellung rotationssymmetrischer Verbunde (beispielsweise Brennerrohr, Fig.2) wurde ein dickwandiger Zylinder aus kurzfaserverstärktem Verbundmaterial 2 (beispielsweise Duotherm® HT 140) mittels Vakuumformtechnik hergestellt, auf ein dünnwandiges WHIPOX®-Rohr 1 aufgebracht und anschließend gesintert.

## Patentansprüche

1. Mehrschichtiges Formteil aus mindestens einem langfaserverstärkten Verbundmaterial (1) und mindestens einem kurzfaserverstärkten Verbundmaterial (2), **dadurch gekennzeichnet, dass**
a) das langfaserverstärkte Verbundmaterial (1) keramische Endlosfasern und keramisches Matrixmaterial enthält,
b) das kurzfaserverstärkte Verbundmaterial (2) keramische Fasern mit einer mittleren Länge in einem Bereich von 1 bis 50 mm und keramisches Matrixmaterial enthält, wobei
c) das langfaserverstärkte Verbundmaterial (1) und das kurzfaserverstärkte Verbundmaterial (2) flächig fest miteinander verbunden sind.

2. Mehrschichtiges Formteil nach Anspruch 1 **dadurch gekennzeichnet, dass** das langfaserverstärkte Verbundmaterial (1) eine Zugfestigkeit von mind. 30 MPa und eine Biegefestigkeit von mind. 30 MPa und/oder das kurzfaserverstärkte Verbundmaterial (2) eine Zugfestigkeit von höchstens 2 MPa und eine Biegefestigkeit von höchstens 2 MPa aufweist.

3. Mehrschichtiges Formteil nach Anspruch 1 oder 2, **dadurch gekennzeichnet, dass** die Fasern des Verbundmaterials (1) und/oder des Verbundmaterials (2) unbeschichtet sind.

4. Mehrschichtiges Formteil nach einem der Ansprüche 1 bis 3, **dadurch gekennzeichnet, dass** die Porosität des langfaserverstärkten Verbundmaterials (1) 20 bis 70 Vol.% und/oder die Porosität des kurzfaserverstärkten Verbundmaterials (2) 50 bis 90 Vol.% beträgt.

5. Mehrschichtiges Formteil nach einem der Ansprüche 1 bis 3, **dadurch gekennzeichnet, dass** das keramische Material der Fasern und/oder der Matrix des langfaserverstärkten Verbundmaterials (1) und/oder des kurzfaserverstärkten Verbundmaterials (2) jeweils unabhängig voneinander überwiegend x₁ Al₂O₃ **•** y₁ SiO₂ enthält,
wobei
x₁ eine Zahl im Bereich von 1 bis 5 und
y₁ eine Zahl im Bereich von 0 bis 4 ist.

6. Mehrschichtiges Formteil nach einem der Ansprüche 1 bis 5, **dadurch gekennzeichnet, dass** das Formteil
a) als Hohlkörper ausgebildet ist, wobei mindestens eine Fläche des langfaserverstärkten Verbundmaterials (1) von mindestens einem kurzfaserverstärkten Verbundmaterial (2) bedeckt ist, oder
b) als Formteil ausgebildet ist, wobei mindestens ein kurzfaserverstärktes Verbundmaterial (2) auf zwei gegenüberliegenden Flächen von dem langfaserverstärkten Verbundmaterial (1) bedeckt ist oder mindestens ein langfaserverstärktes Verbundmaterial (1) auf zwei gegenüberliegenden Flächen von dem kurzfaserverstärkten Verbundmaterial (2) bedeckt ist, wobei die langfaserverstärkten Verbundmaterialien (1) vollflächig oder teilflächig ausgebildet sind.

7. Mehrschichtiges Formteil nach Anspruch 6 **dadurch gekennzeichnet, dass** die Teilflächigkeit in Form von Stegen oder als Netzstruktur ausgebildet ist.

8. Verfahren zur Herstellung eines Formteils gemäß einem der Ansprüche 1 bis 7 **dadurch gekennzeichnet, dass** man wenigstens ein langfaserverstärktes Verbundmaterial (1) mit wenigstens einem kurzfaserverstärkten Verbundmaterial (2) verbindet.

9. Verfahren nach Anspruch 8, **dadurch gekennzeichnet, dass** man die Schritte zum Verbinden der Verbundmaterialien je nach Anzahl der Verbundmaterialien einfach oder mehrfach wiederholt werden, wobei
a) die miteinander zu verbindenden Verbundmaterialien (1,2) unabhängig voneinander gesintert, als Grünkörper, trocken oder nass eingesetzt werden,
b) gegebenenfalls ein Keramikkleber eingesetzt wird.

10. Verfahren nach Anspruch 8 oder 9, **dadurch gekennzeichnet, dass** man ein gesintertes, als Grünkörper vorliegendes oder trockenes Verbundmaterial (1 oder 2) vor dem Verbinden mit einem weiteren Verbundmaterial befeuchtet.
